(19) **Europäisches Patentamt**

**European Patent Office**

**Office européen des brevets**

(11) Veröffentlichungsnummer: **0 346 357 B1**

(12) # EUROPÄISCHE PATENTSCHRIFT

(45) Veröffentlichungstag der Patentschrift:
21.08.91 Patentblatt 91/34

(21) Anmeldenummer: 88901574.9

(22) Anmeldetag: 22.01.88

(86) Internationale Anmeldenummer:
PCT/EP88/00046

(87) Internationale Veröffentlichungsnummer:
WO 88/06544 07.09.88 Gazette 88/20

(51) Int. Cl.⁵: **B60T 8/66**

---

(54) **ANTIBLOCKIERREGELSYSTEM.**

---

(30) Priorität: 28.02.87 DE 3706514

(43) Veröffentlichungstag der Anmeldung:
20.12.89 Patentblatt 89/51

(45) Bekanntmachung des Hinweises auf die
Patenterteilung:
21.08.91 Patentblatt 91/34

(84) Benannte Vertragsstaaten:
AT DE FR GB SE

(56) Entgegenhaltungen:
DE-A- 1 927 113
DE-A- 2 204 092
DE-A- 3 342 553

(73) Patentinhaber: ROBERT BOSCH GmbH
Postfach 10 60 50
W-7000 Stuttgart 10 (DE)

(72) Erfinder: BRASCHEL, Volker
Goethestrasse 1
W-7100 Heilbronn (DE)
Erfinder: SEITZ, Dieter
In der Aue 12
W-7141 Schwieberdingen (DE)

(74) Vertreter: Kammer, Arno
Postfach 10 56 08 Grenzhöfer Weg 36
W-6900 Heidelberg 1 (DE)

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Antiblockierregelsystem mit den Merkmalen des Oberbegriffs des Anspruches 1.

### Stand der Technik

Aus den DE-OS 2313763 ist ein Antiblockierregelsystem mit den obengenannten Merkmalen bekannt ; bei diesen Antiblockierregelsystem, das auch Schlupfsignale erzeugt und deshalb auch eine Referenzgeschwindigkeitsgröße benötigt, ist ein Fahrzeugverzögerungsmesser vorgesehen, der dazu benutzt wird, kurz nacheinander festzustellen, ob das Fahrzeug bei Betrieb des Antiblockierreglers oder ohne seine Wirkung besser gebremst wird. Der Fahrzeugverzögerungsgeber wird hier also zur Überprüfung des Reglers herangezogen.

Es ist auch bekannt (DE-OS 2528712), die Referenzgeschwindigkeitsgröße, die zur Schlupfregelung benötigt wird, dadurch zu bilden, daß die Geschwindigkeitssignale zweier oder mehrerer in'die Regelung einbezogener Räder durch Auswahl des am schnellsten drehenden Rads zur Referenzbildung herangezogen werden, wobei diese Radgeschwindigkeitssignale $V_R$ die gegebenfalls notwendige Erhöhung der Referenzgeschwindigkeitssignale entweder unverzögert oder mit wenigstens einer vorgegebenen Steigung bewirken. Für die Erniedrigung der Referenzgeschwindigkeitsgröße $V_{Ref}$ im Instabilitätsfall ($V_R < V_{Ref}$) sind mehrere Rampen vorgesehen, die in Abhängigkeit vom ermittelten Radbewegungsverhalten gemäß einen vorgegebenen Algorithmus wirksam gemacht werden.

Aus der DE-A13342553 ist es außerdem bekannt, die Radgeschwindigkeiten und die Fahrzeugverzögerung zu messen. In Beschleunigungs- und Verzögerungsphasen des Fahrzeugs wird ausgehend von der Radgeschwindigkeit zu einem radschlupfungefährdeten Zeitpunkt durch Integration der Fahrzeugbeschleuigung die wahre Fahrzeuggeschwindigkeit ermittelt und zur Schlupfregelung ausgenutzt.

### Aufgabe, Lösung und Vorteile

Der Erfindung liegt die Aufgabe zugrunde, die Bezugsgrößenbildung mit einfacheren Mitteln bei größerer Anpassung an die tatsächlichen Fahrzeuggeschwindigkeitsverlauf zu erreichen.

Diese Aufgabe wird durch die ein Anspruch 1 angegebenen Merkmale gelöst

Wichtig ist bei der Erfindung, daß die aus der Referenzgeschwindigkeits- größe abgeleitete Fahrzeugverzögerung ihrerseits wieder die (negative) Steigung dieser Referenzgeschwindigkeitsgröße im Instabilitätsfall ($V_R < V_{Ref}$) beeinflußt. Dabei wird eine besonders günstige Referenzgrößenbildung erreicht, wenn die negative Steigung der Referenzgeschwindigkeitsgröße in den Instabilitätsphasen etwas (um einen bestimmten Wert bzw. Prozentsatz von z.B. 10-20%) größer als die Fahrzeugverzögerung gewählt wird, d.h. die Referenzgeschwindigkeitsgröße etwas stärker als die Fahrzeuggeschwindigkeit reduziert wird. Durch die gegenseitige Beeinflussung von Fahrzeugverzögerung und Steigung der Referenzgeschwindigkeitsgröße wird ein progressives Verhalten für die beiden Größen erzielt, wobei z.B. eine grössere Verzögerung eine größere Steigung der Referenzgeschwindigkeitsgröße bewirkt und umgekehrt. Die Referenzgeschwindigkeitsgröße kann hier die Fahrzeuggeschwindigkeit kaum übersteigen. Der Wert, um den die negative Steigung der Referenzgeschwindigkeitsgröße größer als die errechnete Verzögerunggewählt wird, kann von der Zeitspanne des Druckaufbaus, z.B. der Zahl der Druckaufbauimpulse nach einen Druckabbau abhängiggemacht werden (Wert steigt mit der Impulszahl). Hierdurch kann ein positiver μ— Sprung besser erfaßt werden und bei langen Instabilitätsphasen auf niedrigem y kommt es zu einer nur langsamen Erhöhung der Steigung der Referenzgeschwindigkeitsgröße.

Günstige Ermittlungsmethoden für die Fahrzeugverzögerung ergeben sich aus den Unteransprüchen und der Figuren-Beschreibung.

Die so ermittelte Fahrzeugverzögerung kann auch für andere Regelungzwecke z. B. auch zur Überwachung der Regelung, wie eingangs erwähnt, benutzt werden.

Neben Straßenverhältnissen, denen eine μ— Schlupfkurve mit einem ausgeprägten Maximum entspricht, gibt es auch Straßenverhältnisse, bei denen der Reibbeiwert μ mit steigendem Schlupf stetig anwächst. Wie später noch gezeigt wird, kann es in diesem Fall vorkommen, daß, wenn die errechnete Fahrzeugverzögerung einmal zu große Werte erreicht hat, die Räder in immer größeren Schlupf einlaufen und schließlich blockieren. Durch die zu hoch errechnete Fahrzeugverzögerung wird der Druckabbau für die tatsächlich vorliegenden Reibungsverhältnisse zu unempfindlich. Es wird nur so viel Bremsdruck abgebaut, daß die Radumpfangsverzögerung nicht weiter zunimmt. Für eine deutliche Wiederbeschleunigung des Rads reicht dies meist jedoch nicht aus. Es muß deshalb, um eine ausreichend große Radbeschleunigung zu erreichen, die errechnete Fahrzeugverzögerung korrigiert werden, sodaß sie wieder der echten Fahrzeugverzögerung entspricht.

Um dies zu erreichen wird gemäß einer Weiterbildung der Erfindung vorgeschlagen, die errechnete Fahrzeugverzögerung mit der Verzögerung eines oder mehrerer Räder zu vergleichen und den anschließenden Druckaufbau dann zu sperren, wenn die errechnete Fahrzeugverzögerung größer als die Radverzögerung ist. Da ein stabil laufendes Rad keine größere Verzögerung als die Fahrzeugverzögerung aufweisen kann, kann dieser Fall praktisch nicht vorkommen und sein Auftreten muß von einer Falschberechnung der Fahrzeugverzögerung herrühren. Durch den verbotenen Druckaufbau läuft das Rad nicht erneut in höheren Schlupf ein. Die Referenzgeschwindigkeit trifft auf die Radumfangsgeschwindigkeit und wird durch diese gestützt. Dadurch wird die errechnete Fahrzeugverzögerung auf einen der tatsächlichen Fahrzeugverzögerung angenäherten Wert korrigiert.

Es ist heute weit verbreitet, den Fahrzeugen als Ersatzrad ein sogenanntes Notrad zuzuordnen, das meist einen geringeren Durchmesser aufweist und damit schneller dreht. Das Einbeziehen der Geschwindigkeit eines solchen Notrads in die Bezugsgrößenbildung bewirkt — insbesondere bei Maximumbildung — eine Verfälschung der Referenzbildung, wodurch es zu Unterbremsungen kommen kann.

Zur Vermeidung dieses Nachteils wird gemäß einer Weiterbildung der Erfindung neben der Referenzgeschwindigkeitsgröße eine Hilfsreferenzgeschwindigkeitsgröße gebildet. Bei deren Bildung bestimmt das am schnellsten drehende Rad den Anstieg. Aus dieser Hilfsreferenzgeschwindigkeitsgröße wird die Fahrzeugverzögerung in der beschriebenen Weise abgeleitet.

Bei der Bildung der eigentlichen Referenzgeschwindigkeitsgröße für die Schlupfbildung bestimmt dagegen das am zweitschnellsten drehende Rad deren Anstieg. Dagegen wird die aus der Hilfsreferenzgeschwindigkeitsgröße gewonnene Fahrzeugverzögerung dazu herangezogen, die Steigung in den Instabilitätsphasen zu bestimmen.

Es ist deshalb hier möglich, aus der Geschwindigkeit jedes einzelnen Rads eine Referenzgeschwindigkeitsgröße abzuleiten und lediglich deren Steigung in den Instabilitätsphasen durch die aus der Hilfsreferenzgeschwindigkeitsgröße ermittelten Fahrzeugverzögerung zu beeinflussen.

Figurenbeschreibung

Anhand der Zeichnung werden Ausführungsbeispiele der Erfindung erläutert. Es zeigen :

Fig. 1        eine Prinzipdarstellung eines Antiblockierreglers
Fig. 2        die Schlupfbildung innerhalb der Auswertschaltung der Fig. 1 mit der erfindungsgemäßen Referenzgeschwindigkeitsgrößenbildung
Fig. 4-6      Diagramm zur Erläuterung
Fig. 7-8      Alternativen zu der Ausführungsform der Fig. 2
Fig. 9        ein weiteres Diagramm zur Erläuterung.

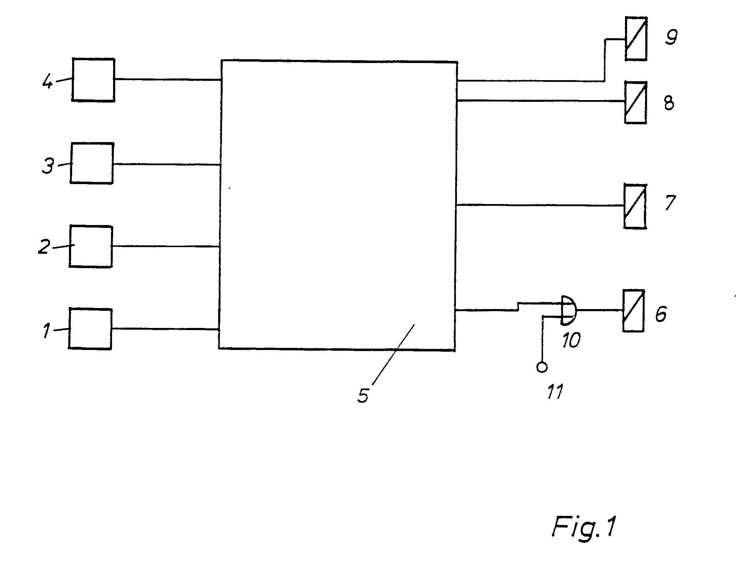

Fig. 1 zeigt die Komponenten eines Antiblockierregelsystems. Mit 1-4 sind den vier Fahrzeugrädern zugeordnete Meßwertgeber zur Bestimmung der Radgeschwindigkeiten bezeichnet.

Eine Auswertschaltung, der die Geschwindigkeitssignale den Meßwertgeber 1-4 zugeführt werden, trägt das Bezugszeichen 5 und vier Magnetventile zur Bremsdruckvariation, die von in der Auswerteschaltung 5 erzeugten Bremsdrucksteuersignalen angesteuert wurden, die Bezugszeichen 6-9. Auf das in Fig. 1 eingeschaltete Oder-Gatter 10 wird später eingegangen.

In der Auswertschaltung 5 werden neben anderen Signalen auch Schlupfsignale $s_1$ bis $s_4$ gebildet, die in der im Block 5 enthaltenen Ansteuerlogik bei der Bildung der Ansteuersignale der für die Ventile 6 bis 9 verwendet werden. Die Schlupfsignale $s_1$ bis $s_4$ werden aus den Geschwindigkeitssignalen der diesen Rädern zugeordneten Meßwertgeber 1 und 4 gewonnen. Die Signale sind mit $V_{R1}$, $V_{R2}$, $V_{R3}$ und $V_{R4}$ bezeichnet.

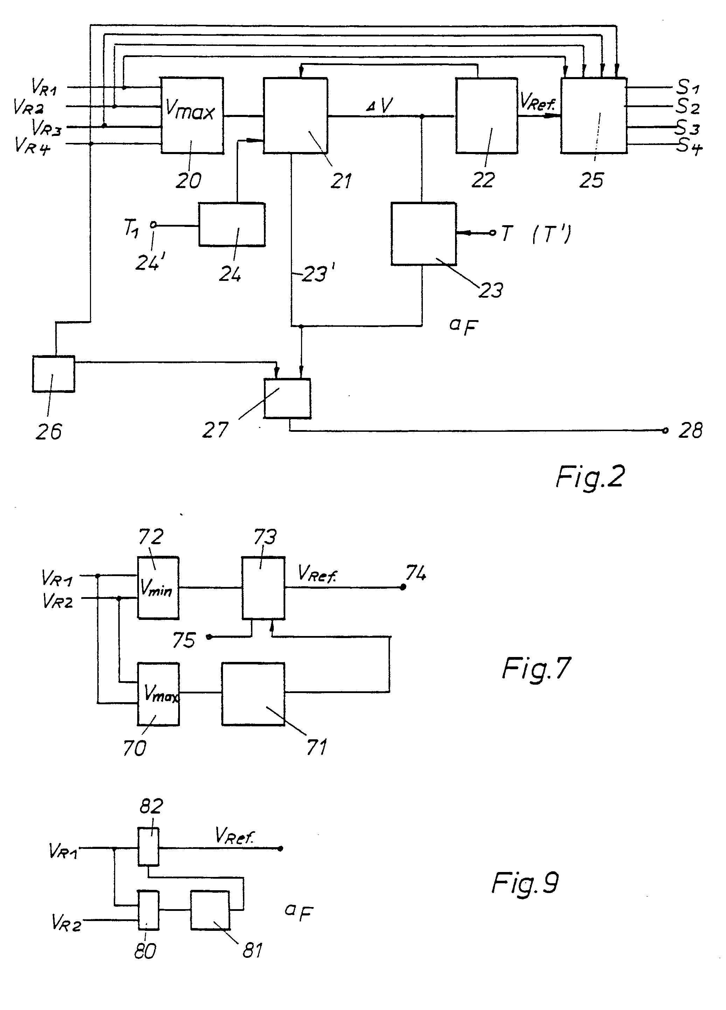

Eine mögliche Schaltung für die Schlupfbildung zeigt Fig. 2.

Dort wird in einem Block 20 aus beiden Radgeschwindigkeitssignalen $V_{R1}$ bis $V_{R4}$ der größere Wert $V_{max}$ herausgefiltert und an einen Block 21 weitergegebenen, in dem die augenblickliche Referenzgeschwindigkeitsgröße gebildet wird. Hierzu wird auch die vorher ermittelte und in einem Block 22 gespeicherte Referenzgröße benötigt. Außerdem wird für den Fall der Instabilität die Fahrzeugverzögerung benötigt, die über einer Leitung 23' zugeführt wird. Schließlich wird über einen Block 24 ein Wert in den Block 21 eingegeben, der bestimmt, um wieviel (welchen Prozentsatz) die Steigung der Referenzgeschwindigkeitsgröße größer als die Fahrzeugverzögerung sein soll. Über eine Klemme 24' wird eine Große $T_A$ zugeführt, die den Prozentsatz in Abhängigkeit von der Druckaufbauzeit veriiert.

Im Block 21 wird die Referenzgeschwindigkeitsgröße derart gebildet, daß ausgehend von der im Zeittakt vorher ermittelten Referenzgröße bei einem diese Größe übersteigenden Wert für $V_{max}$ die Referenzgröße nach Maßgabe des Werts $V_{max}$ erhöht wird und im Falle einer Instabilität ($V_{max} < V_{Ref}$) die Abnahme der Referenzgröße gemäß der über Leitung 23' zugeführten Fahrzeugverzögerung unter Berücksichtigung des vom Block

3

24 bestimmten Prozentsatzes erfolgt.

Die Differenz $\Delta v$ zwischen nacheinander ermittelten Referenzgrößen wird neben dem Block 22 zur Korrektur der alten Referenzgröße auch einem Block 23 zugeführt- Die augenblicklich vorhandene Referenzgröße $V_{Ref}$ wird einem Block 25 zugeführt, dem auch die Radgeschwindigkeitssignale $V_{R1}$ bis $V_{R4}$ zur Bildung der Schlupfwerte $s_1$ bis $s_4$ zugeführt werden.

Im Block 23 wird die Fahrzeugverzögerung $a_F$ gebildet und dem Block 21 zugeführt- Dies kann in verschiedener Weise erfolgen : So können z. B. bestimmt durch einen Zeittakt T mehrere nacheinander ermittelte $\Delta$ V-Werte aufaddiert werden und am Ende von T als Fahrzeugverzögerung ausgegeben werden. Um die Messung zu verbessern können unterschiedliche Zeittakte (T und T') verwendet werden derart, daß mit unterschiedlichen Zeittakten eine Addition erfolgt und gegebenfalls nacheinander unterschiedliche Fahrzeugverzögerungen abgegeben werden- So kann man z.B. außerhalb der Regelung mit den kürzeren Zeittakt arbeiten.

Es ist jedoch auch möglich, im Block 23 eine Anzahl von Speichern vorzusehen, in die die $\Delta V$-Werte nacheinander eingespeichert werden. Mit jedem neuen $\Delta V$-Wert wird der älteste gespeicherten Wert gelöscht. Hier kann man nach jedem neu eingespeicherten $\Delta V$-Wert (Taktzeit der $\Delta V$ Berechnung) eine neue Fahrzeugverzögerung ausgeben und nicht erst am Ende eines Zeittakts t, der ein Vielfaches der Taktzeit T beträgt.

Es ist aber auch möglich, im Block 23 alle ankommenden $\Delta V$-Werte aufzuaddieren, jeweils den neu erhaltenen Summenwert durch einen vorgegebenen Wert zu dividieren, den dabei erhaltenen Wert von dem Summenwert abzuziehen und die Differenz als Fahrzeugverzögerung auszugeben. Auch hier erhält man im Abstand der Taktzeit t (des Rechners) je einen neuen Fahrzeugverzögerungswert.

In Fig. 2 ist noch angedeutet, daß man dann, wenn die Radverzögerung kleiner als die Fahrzeugverzögerung ist, einen Bremsdruckaufbau verhindern kann.

Hierzu wird das Radgeschwindigkeitssignal differenziert (Block 26) und im Block 27 mit der Fahrzeugverzögerung verglichen. Übersteigt das Fahrzeugverzögerungssignal das Radverzögerungssignal, so gibt der Vergleicher 27 ein Signal ab, das über die Klemme 28 der Klemme 11 und dem Oder-Gatter 10 zugeführt wird.

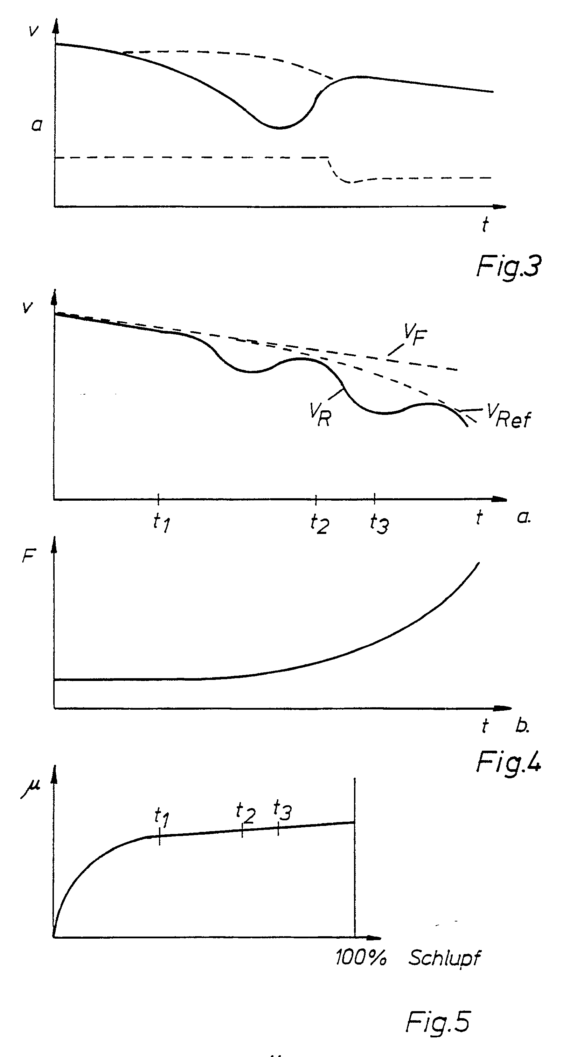

Aus dem Diagramm der Fig. 3, in der die Referenzgeschwindigkeitsgröße $V_{Ref}$, die Radgeschwindigkeitsgröße $V_R$ und die errechnete Fahrzeugverzögerung $a_F$ über der Zeit aufgetragen sind, ist das progressive Beeinflussen zwischen Fahrzeugverzögerung und Steigung der Referenzgröße zu erkennen.

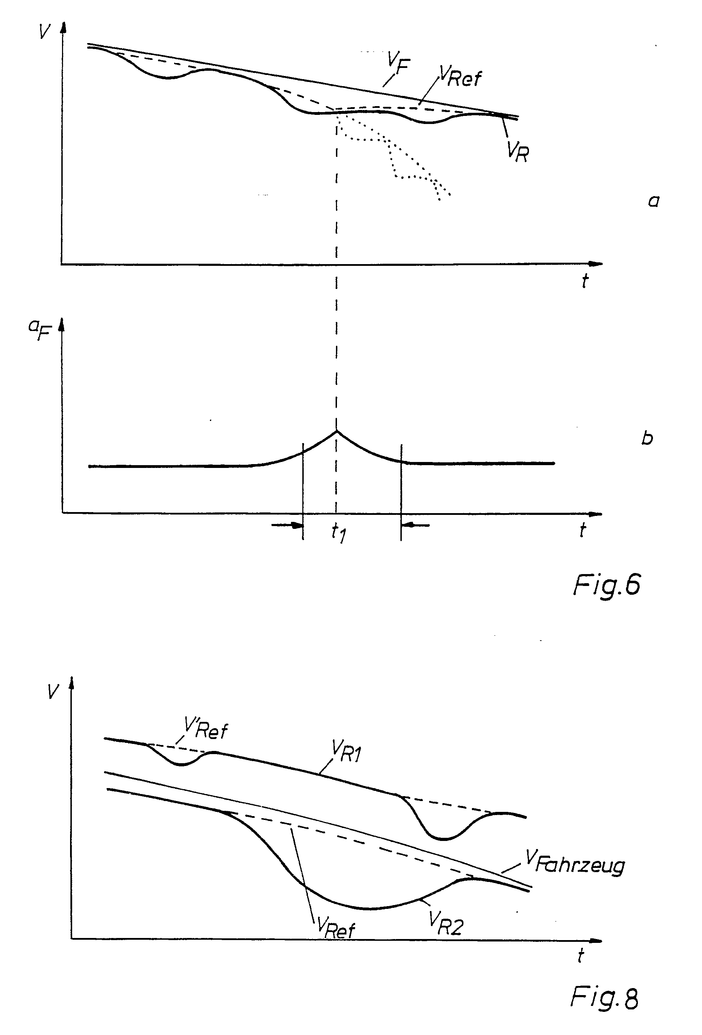

Bei einer $\mu$-Schlupfkurve, wie in Fig. 5 gezeigt, kann es vorkommen, daß die errechnete Fahrzeugverzögerung, wie in Fig. 4 gezeigt, anwächst und damit auch die Steigung der Referenzgröße $V_{Ref}$, sodaß diese sich von der Fahrzeuggeschwindigkeit immer weiter entfernt. Hier kommt es schließlich trotz ABS zu blockierten Rädern. Die oben beschriebene Sperrung des Druck aufbaus bei gegenüber der Radverzögerung größerer Fahrzeugverzögerung bewirkt demgegenüber das in Fig. 6 gezeigte Verhalten. Hier ist noch gepunktet der Verlauf gemäß Fig. 4 a eingezeichnet. Vor $t_1$ wird in der ausgezogenen Version des Bremsdruckaufbau gesperrt, sodaß die Radgeschwindigkeit $V_R$ nicht weiter absinkt und ab $t_1$ die Referenzgröße stützt. Den zugehörigen Verlauf der Fahrzeugverzögerung zeigt Fig. 6 b.

In Fig. 7 wird mit einer Hilfsreferenzgröße gearbeitet. Aus den beiden Radgeschwindigkeiten $V_{R1}$ und $V_{R2}$ wird wieder in einem Block 70 des Maximum gebildet und der Maximalwert wird einem Block 71 zugeführt, der die Funktionen der Blöcke 21 und 23 ausführt und somit die Steigung der ermittelten Referenzgeschwindigkeitsgröße abgibt und einem Block 73 zuführt.

Unterstellt man, daß nur die Radgeschwindigkeiten $VR_1$ und $V_{R2}$ in die Referenzgrößenbildung einbezogen werden, so kann man mit dem Block 72, der jeweils den kleineren der Werte auswählt, die zweitschnellste Radgeschwindigkeit bestimmen. Im Block 73, der den Blöcken 21 und 22 der Fig. 2 entspricht, wird unter Zuhilfenahme den errechneten Fahrzeugverzögerung (aus Block 71) und den Prozentsatz (Klemme 75) die eigentliche Referenzgröße (Klemme 74) ermittelt. Das zugehörige Diagramm im Notradfall zeigt Fig. 8. Das Rad $R_I$ sei das im Durchmesser kleinere Notrad. Es hat den Verlauf $V_{R1}$ und im Blockiergefahrfall kann auch die Hilfsreferenzgröße $V_{Ref}$ wirksam werden. Aus dem Verlauf $V_{R1}$ und teilweise $V_{Ref}$ wird die Fahrzeugverzögerung ermittelt, und zur Steigungsbestimmung der eigentlichen Referenzgröße im Falle $V_R < V_{Ref}$ benutzt.

In Fig. 9 wird wieder aus dem Maximalwert der Radgeschwindigkeiten $V_{R1}$ und $V_{R2}$ (Block 80) in einem Block 81 eine Hilfsreferenzgeschwindigkeit gebildet und daraus die Fahrzeugverzögerung ermittelt, die hier im Block 82 die Steigung der Referenzgröße $V_{Ref}$ im Falle $V_R < V_{Ref}$ bestimmt, wobei diese Referenzgröße nur für die Schlupfbildung am Rad $R_I$ dient.

## Patentansprüche

1. Antiblockierregelsystem enthaltend Meßwertgeber (1 bis 4) zur Bestimmung der Radgeschwindigkeiten, eine Auswerteschaltung (5), der die Meßwertgebersignale zugeführt werden und die abhängig vom Bewegungsverhalten der Räder Bremsdrucksteuersignale erzeugt und eine Bremsdrucksteuereinrichtung (6 bis 9) zur Variation des Bremsdrucks an den Fahrzeugrädern, wobei in der Auswerteschaltung (5) mit Hilfe der Radgeschwindigkeitssignale wenigstens eine dem Fahrzeuggeschwindigkeitsverlauf angenäherte Referenzgeschwindigkeitsgröße ($V_{Ref}$) gewonnen wird, die zusammen mit den Meßwertgebersignalen zur Bestimmung des Schlupfs an den Rädern ausgenutzt wird (in 25) und wobei die Fahrzeugverzögerung ($a_F$) ermittelt und bei der Bremsdruckregelung ausgenutzt wird, dadurch gekennzeichnet, daß die Fahrzeugverzögerung ($a_F$) permanent aus der mittleren Steigung der Referenzgeschwindigkeitsgröße ($V_{Ref}$) ermittelt wird (in 23) und daß die so ermittelte Fahrzeugverzögerung ($a_F$) bei der Festlegung der Steigung der Referenzgeschwindigkeitsgröße ($V_{Ref}$) während Instabilitätsphasen ausgenutzt wird (in 21).

2. Antiblockierregelsystem nach Anspruch 1, dadurch gekennzeichnet, daß die Steigung der Referenzgeschwindigkeitsgröße ($V_{Ref}$) in den Instabilitätsphasen um einen bestimmten Wert (Betrag oder Prozentsatz) größer als die Fahrzeugverzögerung ($a_F$) gewählt wird.

3. Antiblockierregelsystem nach Anspruch 1 oder 2, dadurch gekennzeichnet, daß zur Bestimmung der Fahrzeugverzögerung ($a_F$) die linderung der Referenzgeschwindigkeitsgröße ($V_{Ref}$) in unterschiedlichen Zeiträumen ermittelt wird.

4. Antiblockierregelsystem nach einem der Ansprüche 1 bis 3, dadurch gekennzeichnet, daß zur Bestimmung der Fahrzeugverzögerung ($a_F$) bei digitaler Ausbildung der Auswerteschaltung (5) in aufeinanderfolgenden Zeiträumen die nacheinander ermittelten linderungswerte $\Delta v$ für die Referenzgeschwindigkeitsgrösse ($V_{Ref}$) vorzeichengerecht aufaddiert werden (in 23).

5. Antiblockierregelsystem nach einem der Ansprüche 1 bis 3, dadurch gekennzeichnet, daß zur Bestimmung der Fahrzeugverzögerung ($a_F$) bei digitaler Ausbildung der Auswerteschaltung (5) eine Vielzahl n von nacheinander ermittelten linderungswerten $\Delta v$ für die Referenzgeschwindigkeitsgröße ($V_{Ref}$) gespeichert werden, daß jeweils der älteste gespeicherte Änderungswert bei Einspeicherung des (n + 1) linderungswerts gelöscht wird und daß nach jeder Neueinspeicherung die Summe der linderungswerte gebildet wird (in 23).

6. Antiblockierregelsystem nach einem der Ansprüche 1 bis 3, dadurch gekennzeichnet, daß zur Bestimmung der Fahrzeugverzögerung ($a_F$) bei digitaler Ausbildung der Auswerteschaltung (5) die nacheinander ermittelten linderungswerte für die Referenzgeschwindigkeitsgröße ($V_{Ref}$) aufaddiert werden, daß jeweils diese Summe durch einen bestimmten Faktor (z.B. 30) geteilt wird und daß das dabei erhaltene Ergebnis von der Summe abgezogen und der Rest als neuer Wert der Fahrzeugverzögerung ($a_F$) verwendet wird (in 23).

7. Antiblockierregelsystem nach einem der Ansprüche 1 bis 6, dadurch gekennzeichnet, daß die Fahrzeugverzögerung ($a_F$) aus der Summe der Änderungs- werte der Referenzgeschwindigkeitsgröße ($V_{Ref}$) zwischen den Abfällen des Beschleunigungssignals ermittelt wird.

8. Antiblockierregelsystem nach Anspruch 2, dadurch gekennzeichnet, daß der Wert, um den die Steigung der Referenzgeschwindigkeitsgröße ($V_{Ref}$) größer als die Fahrzeugverzögerung ($a_F$) ist, von der Größe des Druckaufbaus nach einem Druckabbau abhängig ist.

9. Antiblockierregelsystem nach Anspruch 8, dadurch gekennzeichnet, daß der Wert von der Zahl der benötigten Druckaufbauimpulse bei Druckaufbau mit einem aus der Vorgeschichte errechneten wenigstens ersten Druckaufbauimpuls und nachfolgenden weiteren Druckaufbauimpulsen abhängig ist.

10. Antiblockierregelsystem nach einem der Ansprüche 1 bis 9, dadurch gekennzeichnet, daß die errechnete Fahrzeugverzögerung ($a_F$)mit der Verzögerung eines Fahrzeugrads verglichen wird (in 27) und daß der anschließende Druckaufbau gesperrt wird, wenn die Radverzögerung kleiner als die errechnete Fahrzeugverzögerung ist.

11. Antiblockierregelsystem nach einem der Ansprüche 1 bis 10, dadurch gekennzeichnet, daß die Fahrzeugverzögerung aus der Steigung einer Hilfsreferenzgeschwindigkeitsgröße ($V'_{Ref}$) abgeleitet wird, bei deren Bildung (in 70, 71) das jeweils am schnellsten drehende Rad den Anstieg der Hilfsreferenzgeschwindigkeitsgröße ($V'_{Ref}$) bestimmt und daß bei der Bildung der Referenzgeschwindigkeitsgröße ($V'_{Ref}$) für die Schlupfbildung (in 73), bei der jeweils das am zweitschnellsten drehende Rad deren Anstieg bestimmt, die aus der Hilfsreferenzgeschwindigkeitsgröße ($V'_{Ref}$) ermittelte Fahrzeugverzögerung ($a_F$) deren Steigung während der Instabilitätsphasen bestimmt.

12. Antiblockierregelsystem nach Anspruch 11, dadurch gekennzeichnet, daß auch die Steigung der Hilfsreferenzgeschwindigkeitsgröße ($V'_{Ref}$) durch die aus ihr ermittelte Fahrzeugverzögerung ($a_F$) bestimmt wird.

13. Antiblockierregelsystem nach Anspruch 11 oder 12, dadurch gekennzeichnet, daß die aus der Hilfsgeschwindigkeitsreferenz ($V'_{Ref}$) ermittelte Fahrzeugverzögerung ($a_F$) die Steigung der für die Räder jeweils gesondert aus der eigenen Geschwindigkeit abgeleiteten Referenzgeschwindigkeitsgrößen bestimmt (Fig. 9).

EP 0 346 357 B1

## Claims

1. Automatic anti-skid system containing sensors (1 to 4) for determining the wheel speeds, an evaluation circuit (5), to which the sensor signals are fed and which produces brake-pressure control signals as a function of the motional behaviour of the wheels, and a brake-pressure control device (6 to 9) for the variation of the brake pressure at the vehicle wheels, at least one reference speed quantity ($V_{Ref}$) approximated to the vehicle speed characteristic being obtained in the evaluation circuit (5) with the aid of the wheel speed signals, which reference speed quantity is used (in 25), together with the sensor signals, for the purpose of determining the slip at the wheels, and the vehicle deceleration ($a_F$) being determined and utilised in brake-pressure control, characterised in that the vehicle deceleration ($a_F$) is constantly determined (in 23) from the average gradient of the reference speed quantity ($V_{Ref}$) and in that the vehicle deceleration ($a_F$) determined in this way is used (in 21) in defining the gradient of the reference speed quantity ($V_{Ref}$) during instability phases.

2. Automatic anti-skid system according to Claim 1, characterised in that the gradient of the reference speed quantity ($V_{Ref}$) in the instability phases is chosen to be greater than the vehicle deceleration ($a_F$) by a certain value (amount or percentage).

3. Automatic anti-skid system according to Claim 1 or 2, characterised in that, for the purpose of determining the vehicle deceleration ($a_F$), the change of the reference speed quantity ($V_{Ref}$) in different time periods is determined.

4. Automatic anti-skid system according to one of Claims 1 to 3, characterised in that, for the purpose of determining the vehicle deceleration ($a_F$) in the case of digital design of the evaluation circuit (5), the successively determined change values $\Delta v$ for the reference speed quantity ($V_{Ref}$) are added up (in 23) in successive time periods, taking account of their sign.

5. Automatic anti-skid system according to one of Claims 1 to 3, characterised in that, for the purpose of determining the vehicle deceleration ($a_F$) in the case of digital design of the evaluation circuit (5), a multiplicity n of successively determined change values $\Delta v$ for the reference speed quantity ($V_{Ref}$) are stored, in that the oldest stored change value is in each case erased upon storage of the (n + 1) change value and in that the sum of the change values is formed (in 23) after each new storage.

6. Automatic anti-skid system according to one of Claims 1 to 3, characterised in that, for the purpose of determining the vehicle deceleration ($a_F$) in the case of digital design of the evaluation circuit (5), the successively determined change values for the reference speed quantity ($V_{Ref}$) are added up, in that this sum is in each case divided by a certain factor (e.g. 30) and in that the result thereby obtained is subtracted from the sum and the remainder used (in 23) as the new value of the vehicle deceleration ($a_F$).

7. Automatic anti-skid system according to one of Claims 1 to 6, characterised in that the vehicle deceleration ($a_F$) is determined from the sum of the change values of the reference speed quantity ($V_{Ref}$) between the drops of the acceleration signal.

8. Automatic anti-skid system according to Claim 2, characterised in that the value by which the gradient of the reference speed quantity ($V_{Ref}$) is greater than the vehicle deceleration ($a_F$) is dependent on the magnitude of the pressure build-up following a pressure reduction.

9. Automatic anti-skid system according to Claim 8, characterised in that the value is dependent on the number of pressure build-up pulses required during pressure build-up with at least a first pressure build-up pulse calculated from the prehistory and subsequent further pressure build-up pulses.

10. Automatic anti-skid system according to one of Claims 1 to 9, characterised in that the calculated vehicle deceleration ($a_F$) is compared (in 27) to the deceleration of a vehicle wheel and in that the subsequent pressure build-up is inhibited if the wheel deceleration is less than the calculated vehicle deceleration.

11. Automatic anti-skid system according to one of Claims 1 to 10, characterised in that the vehicle deceleration is derived from the gradient of an auxiliary reference speed quantity ($V'_{Ref}$) in the formation of which (in 70, 71) the in each case fastest-rotating wheel determines the rise of the auxiliary reference speed quantity ($V'_{Ref}$) and in that, in the formation of the reference speed quantity ($V'_{Ref}$) for the slip formation (in 73), in which the second-fastest rotating wheel in each case determines the rise of the latter, the vehicle deceleration ($a_F$) determined from the auxiliary reference speed quantity ($V'_{Ref}$) determines the gradient of said deceleration during the instability phases.

12. Automatic anti-skid system according to Claim 11, characterised in that the gradient of the auxiliary reference speed quantity ($V'_{Ref}$) is also determined by the vehicle deceleration ($a_F$) determined from it.

13. Automatic anti-skid system according to Claim 11 or 12, characterised in that the vehicle deceleration ($a_F$) determined from the auxiliary speed reference ($V'_{Ref}$) determines the gradient of the reference speed quantities in each case derived separately for the wheels from their own speed (Fig. 9).

6

**EP 0 346 357 B1**

## Revendications

1. Système de régulation anti-blocage comportant des capteurs de valeur de mesure (1-4) pour déterminer la vitesse des roues, un circuit d'exploitation (5) qui reçoit les signaux des capteurs de valeur de mesure et crée des signaux de commande de pression de frein indépendant du comportement des roues en mouvement et une installation de commande de pression de frein (6 à 9) pour modifier la pression de frein sur les roues du véhicule, et dans le circuit d'exploitation (5) à l'aide des signaux de vitesse de roue, on forme au moins une grandeur de vitesse de référence ($V_{Ref}$) proche de la courbe de la vitesse du véhicule, et qui est utilisée avec les signaux des capteurs de valeur de mesure pour déterminer le glissement sur les roues (dans le circuit 25) et on détermine la décélération du véhicule ($a_F$) et on l'utilise pour réguler la pression de frein, système caractérisé en ce qu'on détermine la décélération du véhicule ($a_F$) de manière permanente à partir de l'augmentation moyenne de la grandeur de la vitesse de référence ($V_{Ref}$) (dans le circuit 23) et en ce qu'on utilise la décélération ainsi obtenue du véhicule ($a_F$) pour fixer l'augmentation de la grandeur de la vitesse de référence ($V_{Ref}$) au cours des phases d'instabilité (dans le circuit 21).

2. Système de régulation anti-blocage de roues selon la revendication 1, caractérisé en ce qu'on choisit l'augmentation de la grandeur de la vitesse de référence ($V_{Ref}$) dans les phases d'instabilité en l'augmentant d'une valeur déterminée (valeur absolue ou pourcentage) par rapport la décélération du véhicule ($a_F$).

3. Système de régulation anti-blocage de roues selon la revendication 1 ou 2, caractérisé en ce que pour déterminer la décélération du véhicule ($a_F$), on détermine la variation de la grandeur de la vitesse du référence ($V_{Ref}$) dans différents intervalles de temps.

4. Système de régulation anti-blocage de roues selon l'une des revendications 1 à 3, caractérisé en ce que pour déterminer la décélération du véhicule ($a_F$) dans le cas d'un circuit d'exploitation (5) à structure numérique, on additionne dans des intervalles de temps successifs, les valeurs de variation $\Delta v$ déterminées de manière successive pour la grandeur de la vitesse de référence ($V_{Ref}$) avec un signe algébrique correct (dans le circuit 23).

5. Système de régulation anti-blocage de roues selon l'une des revendications 1 à 3, caractérisé en ce que pour déterminer la décélération du véhicule ($a_F$) dans le cas d'un circuit d'exploitation (5) à structure numérique, on met en mémoire un grand nombre (n) de valeurs de variation $\Delta v$ déterminées successivement pour la grandeur de vitesse de référence ($V_{Ref}$) et en ce qu'on efface chaque fois la valeur de variation la plus ancienne mise en mémoire lors de l'enregistrement de la valeur de variation d'ordre (n + 1) et en ce qu'après chaque nouvelle mise en mémoire, on forme la somme des valeurs des variations (dans le circuit 23).

6. Système de régulation anti-blocage selon l'une des revendications 1 à 3, caractérisé en ce que pour déterminer la décélération du véhicule ($a_F$) dans le cas d'un circuit d'exploitation (5) de structure numérique, on additionne les variations déterminées successivement pour la grandeur de la vitesse de référence ($V_{Ref}$) et on divise cette somme par exemple par un coefficient (par exemple 30) et en ce que le résultat ainsi obtenu est retranché de la somme et le reste est utilisé comme nouvelle valeur pour la décélération du véhicule ($a_F$) (dans le circuit 23).

7. Système de régulation anti-blocage selon l'une des revendications 1 à 6, caractérisé en ce qu'on détermine la décélération du véhicule ($a_F$) à partir de la somme des valeurs de variation de la grandeur de la vitesse de référence ($V_{Ref}$) entre les pentes du signal d'accélération.

8. Système de régulation anti-blocage selon la revendication 2, caractérisé en ce que la valeur selon laquelle on agrandit l'augmentation de la grandeur de la vitesse de référence ($V_{Ref}$) par rapport à la décélération du véhicule ($a_F$) dépend de l'importance de l'augmentation de pression après une diminution de pression.

9. Système de régulation anti-blocage selon la revendication 8, caractérisé en ce que la valeur dépend du nombre d'impulsions d'augmentation de la pression nécessaires lors de l'établissement de la pression avec au moins une première impulsion d'augmentation de pression calculée à partir de l'état antérieur et des autres impulsions d'établissement de pression ultérieures.

10. Système de régulation anti-blocage selon l'une des revendications 1 à 9, caractérisé en ce que la décélération calculée du véhicule ($a_F$) est comparée à la décélération d'une roue de véhicule (dans le circuit 27) en ce qu'on bloque l'augmentation de pression consécutive si la décélération calculée de la vitesse est atteinte.

11. Système de régulation anti-blocage selon l'une des revendications 1 à 10, caractérisé en ce que la décélération du véhicule est obtenue à partir de l'augmentation d'une grandeur de vitesse de référence auxiliaire ($V'_{Ref}$) pour la formation de laquelle (dans les circuits 70, 71) on détermine la montée de la grandeur de la vitesse de référence auxiliaire ($V'_{Ref}$) correspondant à la deuxième roue tournant le plus rapidement et en ce que la formation de la grandeur de vitesse de référence ($V'_{Ref}$) pour obtenir le glissement (dans le circuit 73) est déterminée chaque fois pour la deuxième roue tournant la plus vite qui détermine la décélération du véhicule constatée de la grandeur ($V'_{Ref}$) de la vitesse de référence auxiliaire.

12. Système de régulation anti-blocage de roues selon la revendication 11, caractérisé en ce qu'on déter-

7

mine également l'augmentation de la grandeur de la vitesse de référence auxiliaire (V'$_{Ref}$) à la décélération du véhicule (a$_F$) obtenue à partir de cette grandeur.

13. Système de régulation anti-blocage selon la revendication 11 ou 12, caractérisé en ce qu'on détermine la décélération du véhicule (a$_F$) déterminée à partir de la vitesse de référence auxiliaire (V'$_{Ref}$) par augmentation des grandeurs de référence dérivées séparément à partir de chaque vitesse de roues (figure 9).

*Fig.1*

Fig.2

Fig.7

Fig.9

Fig.3

Fig.4

Fig.5

Fig.6

Fig.8